# FASCICULE DE BREVET EUROPEEN

(11) **EP 1 757 829 B1**
(45) Date de publication et mention de la délivrance du brevet: **28.11.2012**
(21) Numéro de dépôt: 06291202.7
(22) Date de dépôt: 25.07.2006
(51) Int. Cl.: F16D 13/75, F16C 1/22

(54) **Dispositif pour créer une tension prédéfinie dans une commande à câble gainé**
Vorrichtung zur Erzeugung eines vordefinierten Spannungszustands bei Bedienungsvorrichtung mit einem in eine Führungshülle eingelegten Kabel
Device for creating a predefined tension in an actuator using a sheathed cable

(30) Priorité: 28.07.2005 FR 0508066
(43) Date de publication de la demande: 28.02.2007
(73) Titulaire: Dura Automotive Systems, 91570 Bievres (FR)
(72) Inventeur: Lehut, Philippe, 60730 Cauvigny (FR)
(74) Mandataire: Texier, Christian

(56) Documents cités:
- EP-A- 0 874 169
- US-A- 2 814 210
- US-A- 4 799 400
- US-A- 4 887 705

## Description

La présente invention concerne un dispositif pour agir sur la gaine d'un câble gainé de commande (câble Bowden), par exemple de commande d'un frein à main, d'un accélérateur, d'un embrayage d'automobile, afin de rattraper automatiquement les jeux dus aux tolérances de fabrication et aux contraintes de montage des différents éléments.

Un tel dispositif pour créer une tension prédéfinie dans une commande à câble gainé, afin de rattraper automatiquement les jeux dus aux tolérances de fabrication et aux contraintes de montage des différents éléments du dispositif, qui comprend un corps tubulaire et une bague disposée coaxialement, la bague étant retenue sur une extrémité du corps par des moyens qui permettent à la bague de tourner sur elle-même par rapport au corps, la bague et le corps coopérant pour déterminer un passage traversant axial pour le câble, un écrou à denture intérieure et un ressort logé dans le passage et qui prend appui sur le corps pour exercer une poussée sur la vis en direction de la gaine du câble est connu par le document US 4799400.

Il agit directement sur la gaine pour créer une tension prédéfinie dans la commande, permettant un gain de temps de réglage sur chaîne de la partie du câble qui dépasse de la gaine sur la chaîne d'assemblage ou lors d'intervention de maintenance. Le dispositif permet un réglage précis avec possibilité de remise à zéro.

Le dispositif de l'invention comprend :
- un corps tubulaire et une bague disposés coaxialement, la bague étant retenue sur une extrémité du corps par des moyens qui permettent à la bague de tourner sur elle-même par rapport au corps, la bague et le corps coopérant pour déterminer un passage traversant axialement pour le câble ;
- une vis tubulaire creuse, à denture extérieure relativement longue, et interrompue par secteur, mobile à translation dans ledit passage selon l'axe du passage et apte à recevoir axialement une extrémité de la gaine introduite dans le passage et dans la vis jusqu'à une position de butée dans la vis ;
- un ressort logé dans le passage et qui prend appui sur le corps pour exercer une poussée sur la vis en direction de la gaine du câble ;
- un écrou à denture intérieure relativement courte et interrompue par secteur, placé sur la vis et maintenu dans une position déterminée sur l'axe dudit passage, cet écrou étant solidaire en rotation de la bague et apte à être tourné par la bague d'une position de déverrouillage où les dentures de l'écrou et de la vis ne sont pas en prise en sorte que le ressort peut pousser la vis et mettre le câble en tension, à une position de verrouillage où la vis est maintenue par l'écrou.

On décrira ci-après un exemple de réalisation d'un dispositif conforme à l'invention en référence aux figures du dessin joint sur lequel :

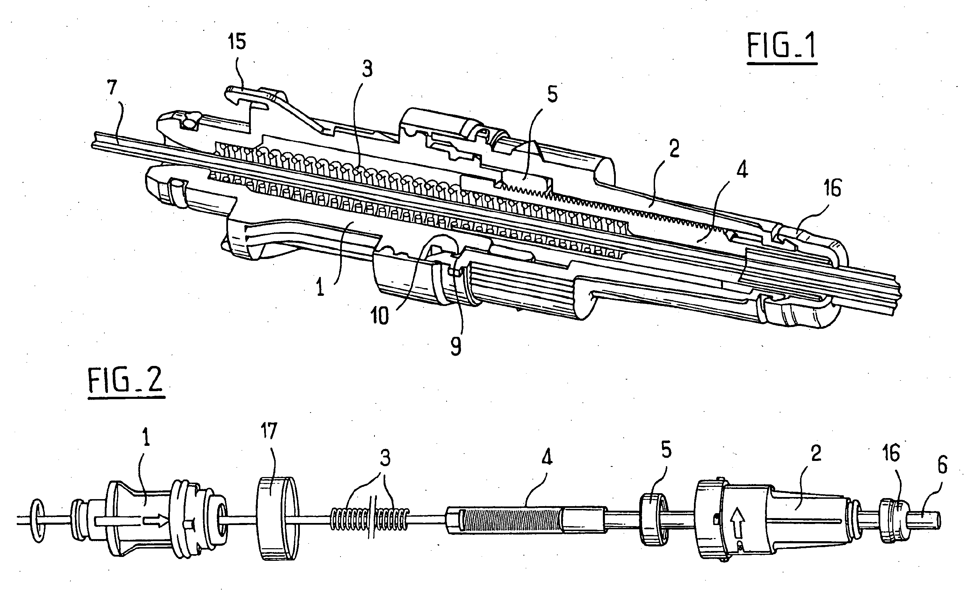

- la figure 1 est une perspective schématique, avec arrachements, du dispositif assemblé ;
- la figure 2 est une vue de principe des différentes pièces qui composent le dispositif, avant assemblage ;

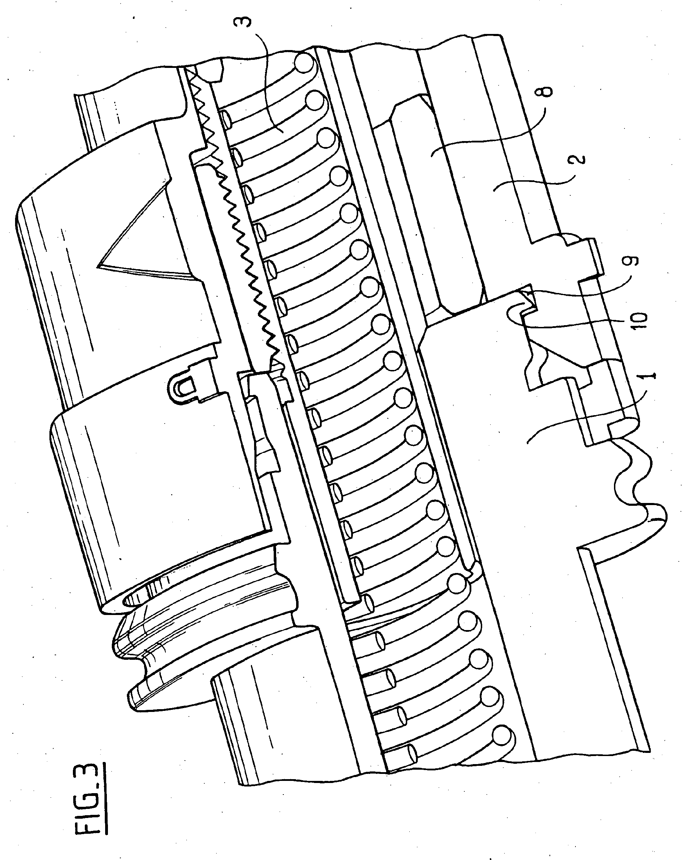

- la figure 3 est une vue agrandie montrant de l'intérieur l'assemblage bague/corps/écrou ;

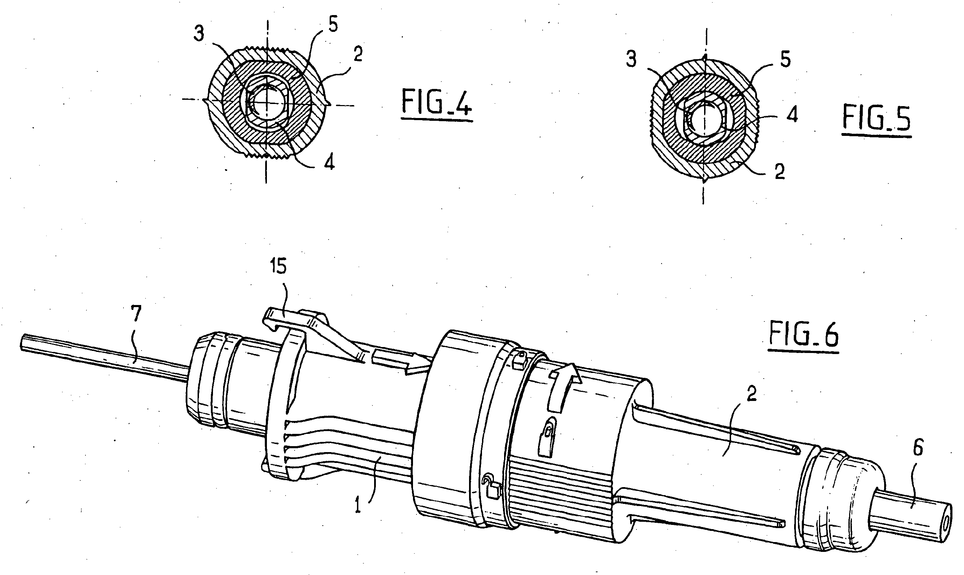

- les figures 4 et 5 sont des coupes transversales de l'écrou et de la vis, respectivement avant et après verrouillage, et
- la figure 6 est une vue extérieure du dispositif, et

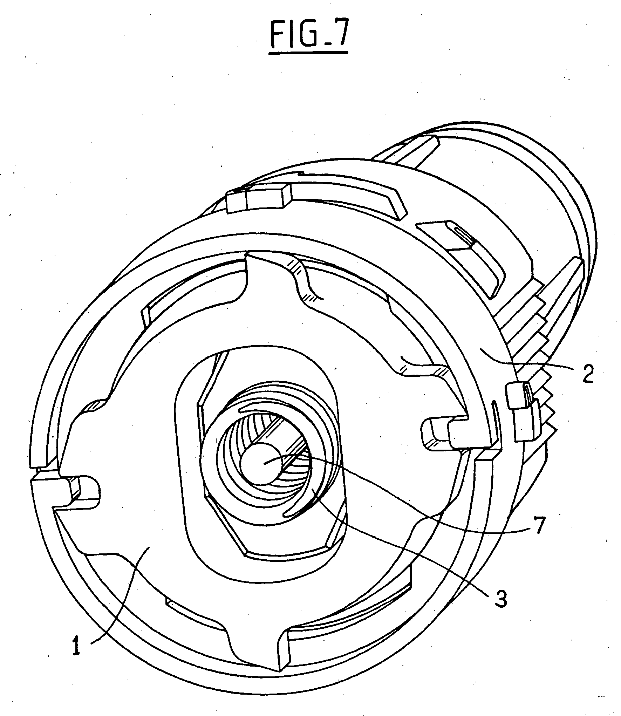

- la figure 7 est une coupe transversale du dispositif.

Le dispositif comprend un corps (1), une bague (2), un ressort (3), une vis (4) et un écrou (5). Il est destiné à un câble gainé Bowden, en soi connu, dont on a représenté la gaine en (6) et le câble en (7).

Avantageusement, le corps et la bague sont en résine de synthèse, tandis que la vis, l'écrou et le ressort sont en acier.

Le corps tubulaire (1) et la bague coaxiale (2) déterminent ensemble un passage axial traversant (8).

Le corps (1) est clipsé à force dans la bague et des moyens coopèrent pour empêcher l'extraction du corps ; par exemple la bague (2) présente une rainure de retenue (9) déformable à force, continue ou discontinue, et le corps (1) présente une collerette (10) qui déforme cette rainure et y est retenue quand le corps est introduit à force dans la bague.

La vis (4) est montée à coulissement dans ce passage. Elle est creuse pour recevoir une extrémité de la gaine du câble jusqu'à une butée constituée par un épaulement interne (11) de la vis ; le ressort de tension (3) est également monté dans le passage de façon à prendre appui sur le corps (1) et pousser sur la vis en direction de la gaine. La vis présente une denture extérieure cylindrique qui est interrompue par secteurs.

L'écrou (5) est placé sur la vis dans un élargissement du passage où l'écrou est maintenu par le corps et la bague de façon à ne pas pouvoir se déplacer longitudinalement mais à pouvoir tourner sur lui-même avec la bague ; cet écrou présente, comme la vis, une denture intérieure cylindrique qui est interrompue par secteurs en sorte que selon la position angulaire de l'écrou par rapport à la vis, la denture de l'écrou est ou n'est pas en prise avec la denture de la vis. Dans une position dite de déverrouillage les dentures ne sont pas en prise en sorte que la vis qui n'est pas maintenue par l'écrou peut se déplacer longitudinalement sous la poussée du ressort (6) et mettre le câble en tension selon la tension du ressort. Dans une position dite de verrouillage, les dentures sont en prise en sorte que la vis peut être bloquée à la position précédemment imposée par la poussée du ressort. En pratique, les dentures sont interrompues en sorte qu'une rotation d'un quart de tour de la bague provoque le passage d'une position à l'autre.

En service, le corps est solidaire de la caisse du véhicule, par exemple par clippage, filetage, etc. lorsque le dispositif doit être placé en bout de câble, ou le corps est solidaire d'un tronçon de gaine lorsque le dispositif doit être placé en milieu de câble.

Dans un exemple de réalisation, le corps est monté serrant dans un fourreau solidaire de la caisse et sa position angulaire est déterminée par insertion d'un tenon latéral du corps dans une mortaise du fourreau, ce qui permet de faire tourner avec une seule main la bague et l'écrou.

L'invention n'est pas limitée à cet exemple de réalisation et les moyens décrits peuvent être remplacés par des moyens fonctionnellement équivalents, dans des variantes de réalisation.

## Revendications

1. Dispositif pour créer une tension prédéfinie dans une commande à câble gainé, afin de rattraper automatiquement les jeux dus aux tolérances de fabrication et aux contraintes de montage des différents éléments du dispositif, qui comprend :
• un corps tubulaire (1) et une bague (2) disposée coaxialement, la bague étant retenue sur une extrémité du corps par des moyens (9,10) qui permettent à la bague de tourner sur elle-même par rapport au corps, la bague et le corps coopérant pour déterminer un passage traversant axial (8) pour le câble (7) ;
• une vis tubulaire creuse (4), à denture extérieure relativement longue et interrompue par secteurs, mobile à translation dans le passage selon l'axe du passage et apte à recevoir axialement une extrémité de la gaine (6) introduite dans le passage et dans la vis jusqu'à une position de butée dans la vis ;
• un ressort (3) logé dans le passage et qui prend appui sur le corps pour exercer une poussée sur • la vis en direction de la gaine du câble ; et
• un écrou (5) à denture intérieure relativement courte et interrompue par secteurs, placé sur la vis et maintenu dans une position déterminée sur l'axe dudit passage, cet écrou étant solidaire en rotation de la bague et apte à être tourné d'une position de déverrouillage ou les dentures de la vis et de l'écrou ne sont pas prise en sorte que le ressort peut pousser la vis et mettre le câble en tension, à une position de verrouillage où la vis est maintenue par l'écrou.

2. Dispositif selon la revendication 1 dans lequel le corps (1) et la bague (2) sont en résines de synthèse, la vis (4), l'écrou (5) et le ressort (3) sont en acier.

3. Dispositif selon la revendication 1 ou 2 dans lequel les dentures sont interrompues en sorte que le passage de la position de déverrouillage à la position de verrouillage ou vice-versa est obtenu par une rotation d'un quart de tour de la bague.

4. Dispositif selon l'une des revendications précédentes dans lequel le corps (1) et la bague (2) sont assemblés par clippage à force du corps dans la bague.

5. Dispositif selon l'une des revendications 1 à 4 dans lequel la bague présente une rainure de retenue (9) déformable à force, continue ou discontinue, et le corps présente une collerette (10) qui déforme cette rainure et y est retenue quand le corps est introduit à force dans la bague.

6. Application d'un dispositif selon l'une des revendications 1 à 5 à la commande à câble d'un frein à main, d'un accélérateur ou d'un embrayage d'automobile.

7. Application selon la revendication 6 où le dispositif est placé en bout de câble, le corps (1) du dispositif étant fixé à la caisse de l'automobile.

8. Application selon la revendication 6 où le corps (1) du dispositif est monté serrant dans un fourreau solidaire de la caisse de l'automobile et sa position angulaire est déterminée par insertion d'un tenon latéral (15) du corps dans une mortaise du fourreau, ce qui permet de faire tourner avec une seule main la bague (2) et l'écrou (5).

## Claims

1. A device for generating a predefined tension in a sheathed cable control, in order to automatically compensate for the plays due to manufacturing tolerances and to mounting constraints of the different elements of the device, which comprises:
• a tubular body (1) and a ring (2) positioned coaxially, the ring being retained on an end of the body by means (9, 10) which allow the ring to rotate on itself relatively to the body, the ring and the body cooperating for determining an axial through-passage (8) for the cable (7);
• a hollow tubular screw (4), with relatively long outer teeth and interrupted by sectors, translationally movable in the passage along the axis of the passage and able to axially receive an end of the sheath (6) introduced into the passage and into the screw up to an abutment position in the screw;
• a spring (3) accommodated in the passage and which bears upon the body in order to exert a thrust on the screw towards the sheath of the cable; and
• a nut (5) with relatively short inner teeth and interrupted by sectors, placed on the screw and maintained in a determined position on the axis of said passage, this nut being interdependent in rotation with the ring and able to be turned from an unlocking position where the teeth of the screw and of the nut are not engaged so that the spring may push the screw and tension the cable, to a locking position where the screw is maintained by the nut.

2. The device according to claim 1, wherein the body (1) and the ring (2) are in synthesis resins, the screw (4), the nut (5) and the spring (3) are in steel.

3. The device according to claim 1 or 2, wherein the teeth are interrupted so that passing from the unlocking position to the locking position or vice versa is obtained by rotating the ring by a quarter of a turn.

4. The device according to one of the preceding claims, wherein the body (1) and the ring (2) are assembled by forcibly clipping the body in the ring.

5. The device according to one of claims 1 to 4, wherein the ring has a forcibly deformable retaining groove (9), either continuous or discontinuous, and the body has a flange (10) which deforms this groove and is retained therein when the body is forcibly introduced into the ring.

6. An application of a device according to one of claims 1 to 5 to the cable control of an automobile handbrake, accelerator or clutch.

7. The application according to claim 6 wherein the device is placed at the end of the cable, the body (1) of the device being attached to the body of the automobile.

8. The application according to claim 6 wherein the body (1) of the device is tightly mounted in a sheath integral with the body of the automobile and its angular position is determined by inserting a side tenon (15) of the body into a mortise of the sheath, which gives the possibility of turning the ring (2) and the nut (5), single handedly.

## Patentansprüche

1. Vorrichtung zum Erzeugen einer vorbestimmten Spannung in einer Betätigung mit ummanteltem Seil, um automatisch die Spiele zu beseitigen, die Herstellungstoleranzen und Befestigungsbelastungen der verschiedenen Elemente der Vorrichtung geschuldet sind, die umfasst:
- einen röhrenförmigen Körper (1) und einen Ring (2), der koaxial angeordnet ist, wobei der Ring auf einem Ende des Körpers durch Mittel (9, 10) gehalten wird, die dem Ring gestatten, sich bezüglich des Körpers um sich selbst zu drehen, wobei der Ring und der Körper zusammenwirken, um einen axialen Durchlass (8) für das Seil (7) zu bestimmen;
- eine hohle röhrenförmige Schraube (4), mit einer äußeren relativ langen Verzahnung und durch Sektoren unterbrochen, die translatorisch in dem Durchlass entlang der Durchlassachse beweglich ist, und geeignet ist, ein Ende des Mantels (6) axial aufzunehmen, das in den Durchlass und in die Schraube bis zu einer Anschlagsposition in der Schraube eingeführt ist;
- eine Feder (3), die in dem Durchlass angeordnet ist und die sich auf dem Körper abstützt, um einen Schub auf die Schraube in Richtung des Mantels des Seils auszuüben; und
- eine Mutter (5) mit innerer Verzahnung, die relativ kurz und durch Sektoren unterbrochen ist, die auf der Schraube angeordnet ist und in einer Position gehalten wird, die auf der Achse des Durchlasses bestimmt ist, wobei die Schraube bei einer Drehung mit dem Ring zusammenhält und geeignet ist, aus einer Freigabeposition, in der die Verzahnungen der Schraube und der Mutter nicht beansprucht sind, so dass die Feder die Schraube schieben kann und das Kabel unter Spannung setzen kann, in eine Sperrposition, in der die Schraube durch die Mutter gehalten wird, gedreht zu werden.

2. Vorrichtung nach Anspruch 1, bei welcher der Körper (1) und der Ring (2) aus Kunstharz sind, die Schraube (4), die Mutter (5) und die Feder (3) aus Stahl sind.

3. Vorrichtung nach einem der Ansprüche 1 oder 2, bei welcher die Verzahnungen so unterbrochen sind, dass der Übergang von der Freigabeposition zur Sperrposition und umgekehrt durch eine Viertel Umdrehung des Rings erhalten wird.

4. Vorrichtung nach einem der vorstehenden Ansprüche, bei welcher der Körper (1) und der Ring (2) durch Kraftklipsen des Körpers in den Ring aneinander gefügt sind.

5. Vorrichtung nach einem der Ansprüche 1 bis 4, bei welcher der Ring eine Rückhaltekerbe (9) aufweist, die unter Kraft verformbar ist, durchgehend oder unterbrochen, und der Körper einen Kragen (10) aufweist, der die Kerbe verformt und dort zurückgehalten wird, wenn der Körper unter Kraft in den Ring eingeführt wird.

6. Verwendung einer Vorrichtung nach einem der Ansprüche 1 bis 5 zur Seilbetätigung einer Handbremse, eines Gashebels oder einer Autokupplung.

7. Verwendung nach Anspruch 6, bei welcher die Vorrichtung am Seilende angeordnet ist, wobei der Körper (1) der Vorrichtung an der Karosserie des Automobils befestigt ist.

8. Verwendung nach Anspruch 6, bei welcher der Körper (1) der Vorrichtung in eine Hülse geklemmt befestigt ist, die an der Karosserie des Automobils hält, und seine Winkelposition durch Einfügen eines seitlichen Zapfens (15) des Körpers in eine Hülsenöffnung bestimmt wird, die gestattet, mit einer einzigen Hand den Ring (2) und die Mutter (5) zu drehen.
